# EUROPEAN PATENT SPECIFICATION

(11) **EP 3 576 564 B1**
(45) Date of publication and mention of the grant of the patent: **31.03.2021**
(21) Application number: 18707123.8
(22) Date of filing: 22.01.2018
(51) Int. Cl.: A44B 18/00, B60N 2/58

(54) **MALE TOUCH FASTENER MATERIAL, UPHOLSTERY AND AN AUTOMOBILE SEAT**
KLETTVERSCHLUSSHAKENMATERIAL, POLSTER UND EIN KRAFTFAHRZEUGSITZ
MATÉRIAU DE FIXATION PAR CONTACT MÂLE, SELLERIE ET SIÈGE D'AUTOMOBILE

(30) Priority: 03.02.2017 GB 201701797
(43) Date of publication of application: 11.12.2019
(73) Proprietor: Bentley Motors Limited, Crewe, Cheshire CW1 3PL (GB)
(72) Inventor: BALOGH, Oliver, Crewe Cheshire CW1 3GT (GB)
(74) Representative: Wilson Gunn
(86) International application number: PCT/GB2018/050178
(87) International publication number: WO 2018/142105

(56) References cited:
- WO-A1-2012/112768
- WO-A1-2014/190042
- US-A- 3 643 316
- US-A1- 2012 011 685

## Description

### Technical Field of the Invention

An aspect of the present invention relates to a male touch fastener material. Other aspects of the present invention relate to upholstery and to a vehicle seat.

### Background to the Invention

Touch fasteners are known which comprise a female material having a base layer with an outer surface comprising a plurality of flexible loops and a male fastener material having a base layer with an outer surface and a plurality of male engagement members projecting from the outer surface. When the outer surfaces of the two materials are pressed together, the male engagement members engage with the loops to form a firm but peelable bond between the two materials. The male engagement members can take different forms and may be hook shaped or mushroom shaped, for example. This type of touch fastener is generally referred to as a "hook-and-loop" fastener and this term will be adopted herein. However, unless explicitly stated otherwise, it should be understood that use of the term "hook-and-loop" fastener is intended to cover such touch fasteners regardless of the shape of the male engagement members or type of female looped fibre textile.

In a typical application, hook-and-loop fasteners are used to releasably secure two items together by attaching a section of female fastener material to one item and a section of the male fastener material to the other item. Whilst it is known to use specially manufactured female touch fastener materials, male touch fastener materials will bond with any suitable material having flexible loops or a fibrous surface, such as brushed nylon. Where an item incorporates such a material on an outer surface, it can be secured to a further item by means of a male touch fastener attached to the further item, without the use of an additional female touch fastener material.

Male touch fastener material typically comes in sheets or strips which can be cut to size. Whilst such materials are flexible, they tend not to be stretchable, at least not in more than one or two directions, and are often largely impervious to air

WO2012/112768 A1 discloses a method of making a reticulated web of male touch fastener material in which a number of interrupted linear slits are formed through a sheet of male touch fastener material. The slits extend parallel to one another and allow the sheet to be stretched to increase the width of the sheet and to form openings in the material.

WO 2014/190042 A1 discloses a laminated touch fastener material which includes a reticulated thermoplastic film. The thermoplastic film having discreate male members projecting from one face is stretched in a first direction such that the material tears to form openings between the discrete male members, who's spacing is increased. The thermoplastic film is then laminated to a carrier sheet and the laminate stretched in a second direction perpendicular to the first direction.

Automobile seats typically comprise a supporting structure upholstered by means of one or more cushion pads and outer covers to provide a seating area and backrest. Cushion pads are made from a variety of materials including foam materials which can be formed into an appropriate shape and which provide the required degree of comfort and structural support. The outer cover provides a hard wearing, yet attractive and comfortable finish and may be made from a natural or manmade fabric or material, including, but not limited to: leather, suede, imitations thereof, Alcantara (RTM) and plastics.

In a vehicle seat, there may be more than one cushion pad and more than one cover. For example, separate cushion pads and covers may be used in seating and backrest portions of a seat. In a known arrangement, the supporting structure of a vehicle seat includes a seat pan adjustably mounted to a main frame. A main seat-cushion pad is supported in the seat pan and is covered by an outer cover to provide a seating surface on which an occupant sits. In many cases, bolster cushions are provided on either side of a central main seat-cushion pad and are located within the same outer cover, which is suitably shaped. Similarly, the backrest may comprise a central main cushion pad with bolster pads on either side, all contained within a common outer cover.

Many vehicle seats these days comprise features such as through seat ventilation and heating and are highly adjustable. Accordingly, the materials used for the cushion pads and outer covers must be compatible with such features and so are required to be air permeable and flexible, for example.

An outer cover on a vehicle seat is shaped for a close fit about a cushion pad but is not usually fixed to the cushion pad over the majority of the surface area of the pad. As a result, the cover can become separated from the surface of a cushion pad and may bulge and/or crease with use, which is not acceptable. This is a particular problem where the cushion pad has a generally flat, or even concave, outer surface. It is known to use small portions of a hook-and-loop touch fastener to secure a cover to a cushion pad at discreet locations but until now it has not been possible to use hook-and-loop fastener materials over a large part of the surface area of a cushion pad. One reason for this is the inability of the known hook-and-loop fastener materials to stretch. If used over a large surface area, the cover is unable to slide over the surface of the cushion pad to any degree when an occupant of a seat moves without the hook-and-loop fastener pealing apart. This results in a lack of comfort and/or unacceptable noise. The lack of air permeability is a further issue that prevents the use known hook-and-loop fastener materials covering large parts of the surface of a cushion pad in seats that have a through-seat ventilation system.

There is a need for an alternative male touch fastener material that overcomes, or at least mitigates, some or all of the disadvantages of the known materials.

There is also a need for an alternative upholstery that overcomes, or at least mitigates, some or all of the disadvantages of known upholstery.

There is a further need for an alternative automobile seat that overcomes, or at least mitigates, some or all of the disadvantages of known automobile seats.

### Summary of the Invention

Aspects of the present invention relate to a male touch fastener material, to upholstery, and to a vehicle seat.

According to a first aspect of the invention, there is provided a web of male touch fastener material comprising a plurality of male engagement members, wherein the web has a mesh structure comprising a plurality of spaced nodes interconnected by elongate links with apertures between the nodes and links; characterised in that each link interconnects an adjacent pair of nodes and the length of each link is greater than the shortest distance measured between said pair of nodes, at least when the mesh structure is in a relaxed, un-stretched condition; the nodes having a minimum spacing when the web is in a relaxed, un-stretched condition and the web structure being configured such that in use the spacing between any given pair of adjacent nodes interconnected by a link can be increased from the minimum spacing if the nodes are pulled apart but without stretching the link itself, such that the structure is stretchable in at least three different directions parallel to the plane of the web.

The mesh structure may be stretchable in at least six directions parallel to the plane of the web.

In an embodiment, the material comprises a planar base layer having opposed major faces, the plurality of male engagement members projecting from a first one of the major faces. The base layer may be substantially non-elastic and/or may be substantially non-stretchable.

A plurality of male engagement members may be provided on each of the nodes and/or on each of the links.

The nodes may be circular.

Each link may have a width which is smaller than the corresponding dimension of the nodes to which it is connected. The corresponding dimension may be a width of the node or a diameter of the node.

In an embodiment, the links are straight and a longitudinal centreline of each link is aligned tangentially to an imaginary circle drawn about the centre of each node to which the link is connected to, at least when the material is in a relaxed, un-stretched condition. In an alternative embodiment, the links are curved when the material is in its relaxed, un-stretched condition.

In an embodiment, the links all project from their respective nodes in the same rotary direction when the material is viewed in plan, e.g. looking at one of the major faces.

The nodes may all be substantially identical to one another in size and shape. The links may be substantially identical to one another in size and shape. The nodes may be arranged in a repeating pattern, with each node interconnected with at least three adjacent nodes by respective links. The nodes may be arranged in a repeating pattern comprising at least some of the nodes being arranged in groups aligned in a circle about a central point. The nodes in each circular group may be arranged with their centres on a common circumference about the central point, that is to say that the centres of all the nodes in a circular group are located at the same radius from the central point. There may be five or more nodes in each circular group. In an embodiment, there are six nodes in each circular group. Each node may form part of at least two circular groups of nodes. At least some of the nodes may form part of at least three circular groups of nodes. A further node may be located centrally within each circular group of nodes. Each circular group of nodes and the links that interconnect them may surround one of said apertures.

The web may be produced by punching the mesh structure from a sheet of male touch fastener material.

In accordance with another aspect of the invention, there is provided upholstery comprising a cushion pad and an outer cover, wherein the outer cover is affixed to a surface of the cushion pad by means of a web of male touch fastener material according to the first aspect of the invention.

In an embodiment, the web is affixed to a surface of the cushion pad, male engagement members of the male touch fastener material engaging with an inner surface of the outer cover. The outer cover may comprise an inner surface of brushed nylon. The web may be applied over the majority of the surface of the cushion pad. The upholstery may form part of a vehicle seat. The cushion pad may be a main seat-cushion pad of the vehicle seat.

In accordance with a third aspect of the invention, there is provided a vehicle seat comprising a cushion pad and an outer cover, wherein the outer cover is affixed to a surface of the cushion pad by means of a web of male touch fastener material according to the first aspect of the invention.

In an embodiment, the web is affixed to a surface of the cushion pad, male engagement members of the male touch fastener material engaging with an inner surface of the outer cover. The outer cover may comprise an inner surface of brushed nylon. The web may be applied over the majority of the surface of the cushion pad. The cushion pad may be a main seat-cushion pad of the vehicle seat.

### Detailed Description of the Invention

In order that the invention may be more clearly understood embodiments thereof will now be described, by way of example only, with reference to the accompanying drawings, of which:
- Figure 1: is a perspective view of part of a cabin of a motor vehicle having a number of automobile seats which can be upholstered in accordance with an aspect of the invention;
- Figure 2a: is a part perspective/part lateral cross sectional view through part of the upholstery of a conventional vehicle seat including a central main cushion pad and an outer cover;
- Figure 2b: is a somewhat schematic view similar to that of Figure 2a but illustrating upholstery in accordance with an aspect of the invention for use in the seats of the vehicle of Figure 1;
- Figure 3: is a perspective view showing cut-away sections of part of the upholstery of Figure 2b in which the pad and cover are shown in longitudinal cross section;
- Figure 4: is a plan view illustrating schematically of an embodiment of part of a web of male touch fastening material in accordance with an aspect of the invention and which forms part of the upholstery of Figures 2b and 3;
- Figure 5: is an enlarged view of part of the material of Figure 4 illustrating relative movement of a pair of nodes and an interconnecting link when the web is subject to a force tending to separate the nodes;
- Figure 6: is a view similar to that of Figure 4 but illustrating an alternative embodiment of a web of male touch fastening material in accordance with an aspect of the invention;
- Figure 7: is a perspective view of part of a vehicle seat upholstery including a central main seat-cushion pad and a pair of bolster cushion pads with a male touch fastener material as illustrated in Figure 6 applied to the upper surface of the central main seat-cushion pad;
- Figure 8: is a perspective view illustrating attachment of part of an outer seat cover to a main seat-cushion pad using the material of Figure 6; and
- Figure 9: is a schematic cross sectional view through part of the web of male touch fastener material of Figures 4 and 6.

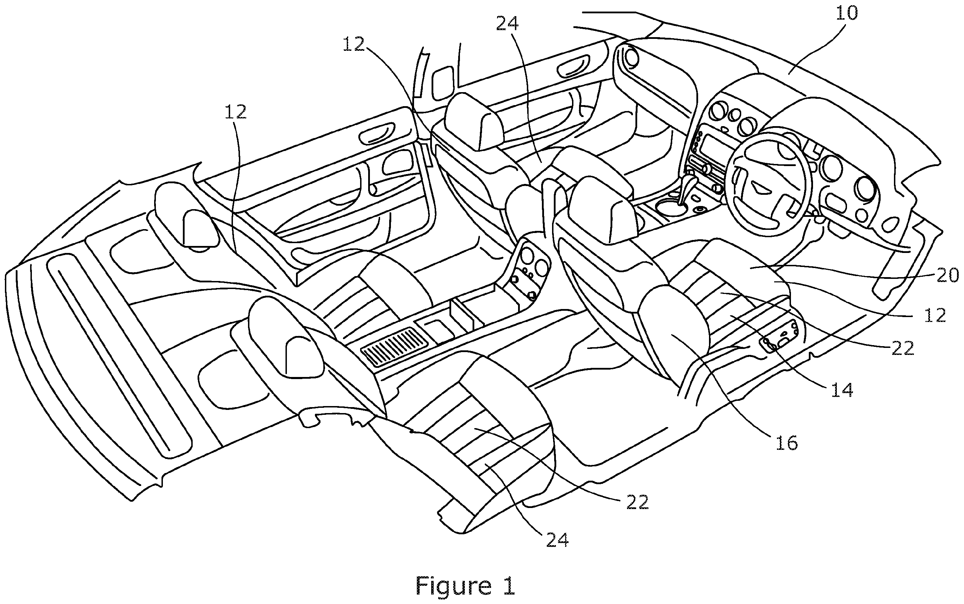

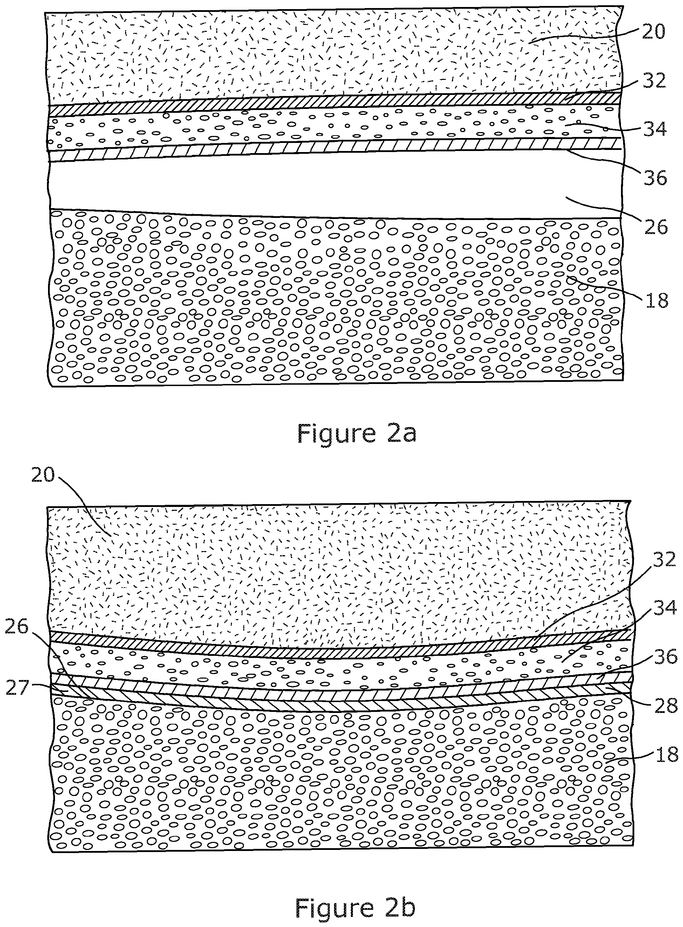

With reference initially to Figure 1, a motor vehicle 10 has a number of automobile seats 12. Each seat has a seating portion 14 and a backrest 16 and compares a supporting framework upholstered with a number of cushion pads and outer cover sections. The seating portion 14 includes a seat pan on which is mounted a central main seat-cushion pad 18 (see Figures 2a and 2b) with bolster cushion pads on either side, all covered by a common outer seat-cover 20. The main seat-cushion pad 18 forms a central seating region 22 of the seating portion 14, whilst the bolster cushion pads define lateral bolster regions 24 on either side. The seats 12 incorporate through seat ventilation and heating features in a known manner and which will not be described further.

Part of a main seat-cushion pad 18 and outer seat cover 20 in a conventional vehicle seat is shown in Figure 2a. The main seat-cushion pad 18 is made of a suitable foam material and has a flat or slightly concave upper surface 26. The outer seat cover 20 has an outer layer 32 with a reticulated scrim foam backing 34 and an inner layer 36 which faces the upper surface 26 of the main seat-cushion pad 18. Due in part to the shape of the upper surface 26 of the cushion pad, the outer cover 18 has become separated from the main seat-cushion pad, at least in a central area of the pad.

Part of a main seat-cushion pad 18 and outer seat cover 20 in a vehicle seat upholstered in accordance with an aspect of the invention is shown in Figure 2b. As with the convention seat upholstery illustrated in Figure 2a, the main seat-cushion pad 18 is made of a suitable foam material and has a flat or slightly concave upper surface 26. The outer seat cover 20 has an outer layer 32 with a reticulated scrim foam backing 34 and an inner layer 36 which faces the upper surface 26 of the main seat-cushion pad 18. The upholstery in Figure 2b differs from the conventional upholstery in that a web 27 of male touch fastener material 28 in accordance with an aspect of the invention is bonded or otherwise affixed to the upper surface 26 of the main-seat cushion pad. The material 28 has a plurality of male engagement members 30 which engage with the inner layer 36 of the outer cover 20 to releasably affix the outer seat cover 20 to the main seat-cushion pad 18 and so inhibit the cover 20 from separating from the cushion pad 18.

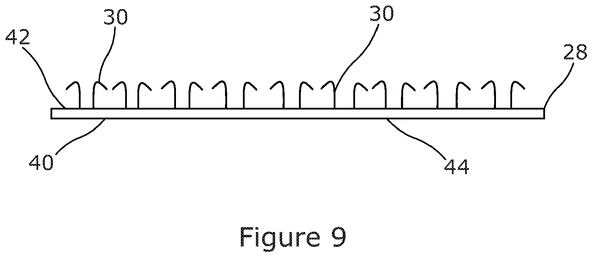

As illustrated in Figure 9, the material 28 of the web 27 has a base layer 40 having opposed major surfaces 42, 44. The web 27 is flexible but when laid on a flat surface it is substantially planar and the opposed major surfaces 42, 44 of the base layer are generally parallel to one another. The plurality of male engagement members 30 project outwardly from a first one of the major surfaces 42 of the base layer, whilst the other major surface 44 can be attached (e.g. bonded or adhered) to an item, such as the main seat-cushion pad 18 in a vehicle seat, in order to affix the web to the item. For use in affixing the outer cover 20 to the upper surface of a main-seat cushion pad 18 of a vehicle seat, the first major surface 42 with the male engagement members 30 is positioned uppermost so as to project towards and engage with the inner layer 36 of the outer cover and the other, lower, major surface 44 is affixed to the upper surface 26 of the main seat-cushion 18. The web 27 of material, or at least the base layer 40, can be regarded as being planar since it is substantially planar when laid on a flat surface. However, due to its flexibility the web can conform to a non-planer surface of an item, such as the upper surface 26 of a cushion pad. The base layer 40 may be a lamination comprising layers of different materials.

The inner layer 36 of the outer cover 18 is made of a suitable material which can be engaged by the male engagement members 30 to affix the cover to the main seat-cushion pad 18 with a desired minimum peel strength. For example, suitable materials for the inner layer 36 may have flexible loops or a fibrous surface for engagement by the male engagement members 30, be capable of stretching, and be air permeable. Brushed nylon is particularly suitable as a material for the inner layer 36 as it is well used and tested in automobile upholstery, it provides the required level of air permeability for use with a through seat ventilation system and it is stretchable to maintain comfort. However, other suitable materials can be used.

The male engagement members 30 can take any suitable form for engagement with the inner layer 36 of the outer cover 20. In the present embodiment, the male engagement members 30 are hooks for engagement with loops on the brushed nylon inner layer 36 of the outer cover. However, the male engagement members 30 can take other forms and could be mushroom shaped, for example. The configuration of the male engagement members 30 can be selected as appropriate depending on the material used for the inner layer 36 of the outer cover 20 to achieve a required peel strength whilst minimising the noise level which may occur when an occupant of the seat moves, for example.

The outer layer 32 of the outer cover 20 can be made of any suitable material, including any materials known for use in vehicle seat covers including, but not limited to: leather, suede, imitations thereof, Alcantara (RTM) fabrics, and plastics materials. In some embodiments, the reticulated scrim foam backing 34 can be omitted or replaced with an alternative padding material. The requirement for and selection of a material for the backing layer 34 may depend on the nature of the material used for the outer layer 32 and the degree of padding and shaping required for the outer cover. At least the outer layer 32 may be perforated to ensure sufficient air permeability for use with through seat ventilation systems.

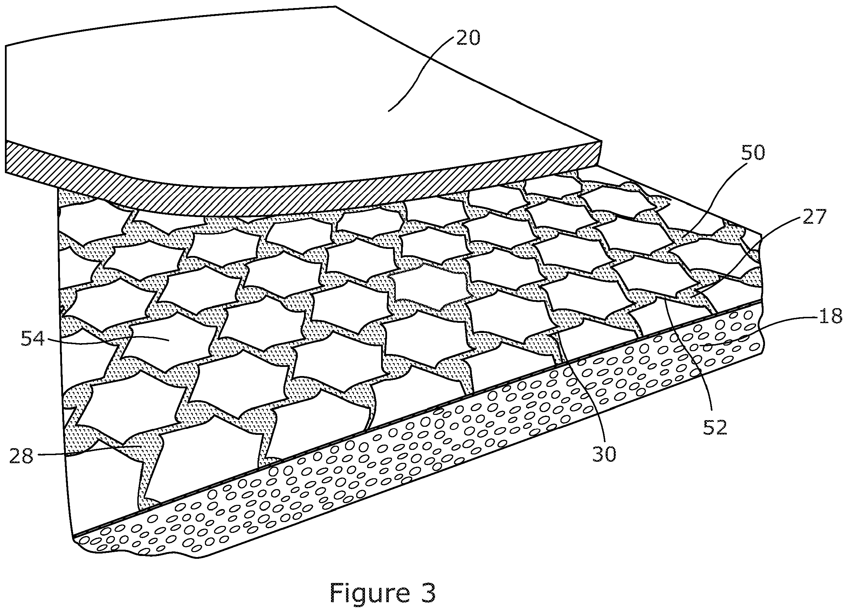

As illustrated in Figure 3, the web 27 of male touch fastener material 28 extends over a large part of the upper surface 26 of the main seat-cushion pad 18 in order to securely affix the outer cover 20 to the main seat-cushion pad 18 and prevent it from separating from the surface of the pad. This significantly improves the quality and appearance of the seat 12. The web 27 applied to the seat-cushion pad 18 can be provided in one or more sheet sections or panels. It will be appreciated that Figure 3 does not show the main seat-cushion pad 18 and outer cover 20 in-situ and that only sections of the pad and cover are shown in order to illustrate the concept.

In order to overcome the problems of using conventional male touch fastener materials, the web 27 of male touch fastener material 28 has a mesh structure with apertures. The apertures provide a suitable level of air permeability compatible for use with through seat ventilation and the mesh structure of the web 27 is able to stretch in multiple directions to accommodate a certain amount of movement of the outer cover 20 in response to movement of an occupant without the cover 20 peeling away from the male touch fastener material 28.

Details of a first embodiment of a web 27 of male touch fastener material 28 in accordance with an aspect of the invention will now be described with reference in particular to Figures 3 to 5.

The web 27 comprises a plurality of spaced nodes or connection areas 50 interconnected by elongate links 52 to form the mesh structure, in which apertures 54 are defined between the nodes 50 and links 52. The nodes 50 are substantially identical to one another in shape and dimension and are spaced apart in a repeating pattern. Each link 52 inter-connects a pair of nodes 52. In the embodiment shown in Figures 3 to 5, the nodes 50 are substantially circular in plan and each node 50 is connected with three adjacent nodes 50 by respective links 52. The links 52 are straight, having a central longitudinal axis Y. Each link has a width X, measured perpendicular to its central longitudinal axis Y, which is smaller than the diameter or width of the nodes 50. The links 52 are angled relative to their respective nodes 50 so that the length of each link 52 is greater than the shortest distance Z measured between the nodes when the material is in a relaxed state (i.e. when it is not subjected to a force tending to separate the nodes). Accordingly, in relation to any given node 50, the longitudinal central axis Y of each link 52 connected to that node extends at an angle relative to a radius R taken from the centre of the node to the longitudinal central axis Y at the outer diameter of the node. The length of each link 52 in this case can be measured along the central longitudinal axis Y of the link between the outer dimeters of the two nodes. Looked at another way, when the material 28 is in a relaxed condition, the longitudinal central axis Y of each link is aligned tangentially to an imaginary circle drawn about the centre of each node 50 the link is attached to and is angled (i.e. non-parallel) relative to a straight line drawn between the centres of the two nodes. When viewed in plan (e.g. looking at one of the major faces), the links 52 are aligned so that they all extend from their respective nodes 50 in the same rotary direction, which may be clockwise or anti-clockwise depending on which side is viewed. In the pattern as shown in Figures 3 to 5, the links 52 all extend from their respective nodes 50 in an anti-clockwise direction when viewed from above.

In the mesh structure of the present embodiment, each node 50 is directly interconnected with three adjacent nodes 50 by respective links 52. The nodes 50 in this mesh structure are arranged in groups of six aligned in a circle with their centres on a common circumference about a central point. Thus the centres of the nodes in each circular group are all located at a common radius from the central point. Each node 50 forms part of three adjacent circular groups of nodes. In the present embodiment, the nodes 50 have an outer diameter of approximately 6 mm and adjacent nodes connected by a link are spaced apart by a distance of approximately 10.05 mm between centres when the web is in a relaxed state. The links 52 each have a width of about 1.45 mm and a length of 4.5 mm. However, the dimensions of the nodes 50 and links 52 can be varied depending on the precise requirement of any particular application. For example, the nodes could have a diameter in the range of 2 to 18 mm and the spacing between connected nodes may in the range of 3 to 31 mm. The links could have a width in the range of 0.4 to 4.4 and a length in the range of 1.5 to 13.5 mm. Male touch fastener material 28 in accordance with an aspect of the invention having nodes and links with dimensions outside of these ranges is also contemplated, especially for applications other than for securing an outer cover to a cushion pad in an automobile seat.

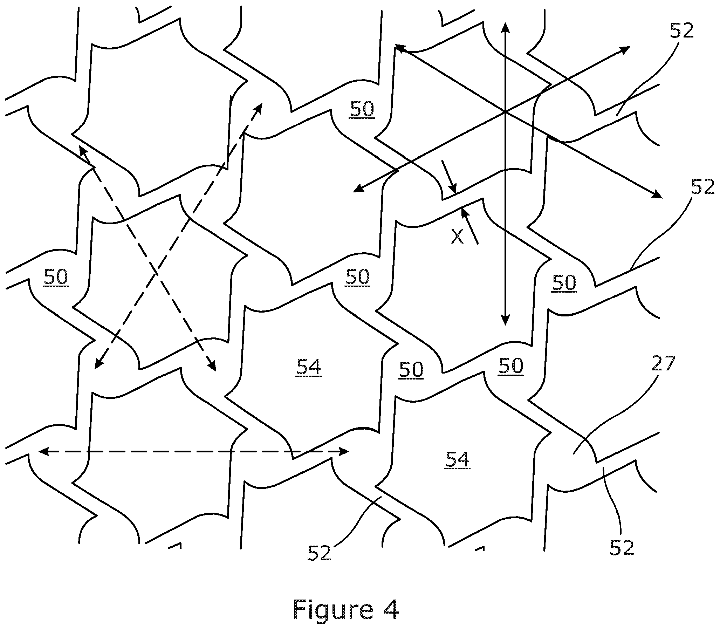

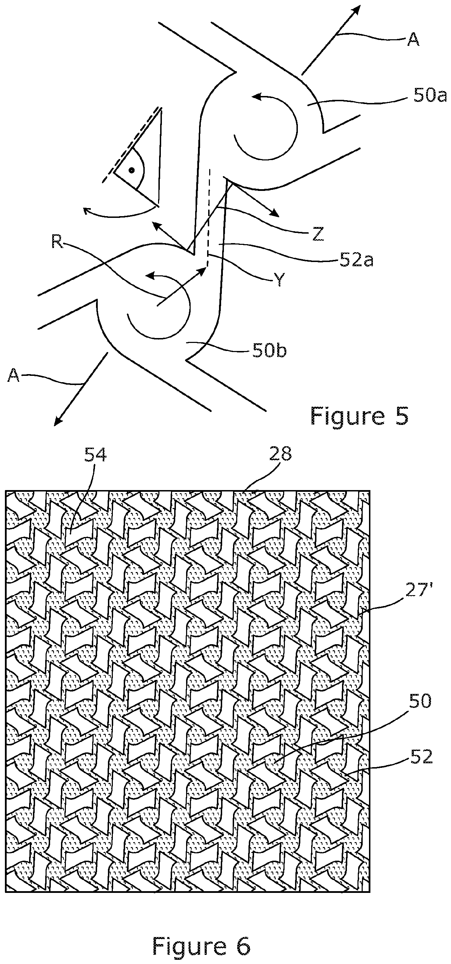

Figure 5 illustrates the effect of applying a force, as indicated by the arrows A, tending to pull a pair of nodes 50a, 50b connected by a link 52a apart. The angled alignment of the link 52a relative to the nodes 50a, 50b allows the spacing between the nodes 50a, 50b to be increased from its relaxed state to a limited extent. As the nodes are pulled apart, they rotate in the same direction to bring the central longitudinal axis Y of the link 52a into closer alignment with a straight line drawn between the centres of the nodes 50a, 50b, thus increasing the spacing between the nodes but without stretching or elongating the link itself. Rotation of the nodes is made possible because the links all project from their respective nodes in the same rotatory direction, as viewed in plan from one side. In tests, it has been found that the material 28 in the web 27 having a mesh structure as shown in Figure 3 is able to stretch to some extent in at least six different directions parallel to the plane of the web as indicated by the arrows in Figure 4. The degree of stretch in the directions indicated by the arrows on the left-hand side is slightly higher than that in the directions indicated by the arrows on the righthand side. When the force A is removed, the mesh structure will revert to its relaxed state, with the nodes rotating in the opposite direction. Thus the mesh structure exhibits elasticity. The mesh structure enables a web 27 of male fastening material having a certain amount of give in the plane of the material to be produced from a material which is non-stretchable and non-elastic in said plane in normal use.

The term "elastic" as used herein refers to the ability of a material or structure to recover from stretching whilst the term "non-elastic" refers to a material or structure that does not exhibit recovery from stretching.

Reference to the mesh structure of the web 27 being stretchable or being able to stretch refers to the ability to increase the spacing between adjacent nodes interconnected by a link by a limited extent when subject to a force tending to pull the nodes apart when compared to the spacing when the web is in an initial relaxed state. The increase in spacing between the adjacent nodes is achieved due to the mesh structure and can be achieved without deforming (stretching) the material itself, that is to say without substantially increasing the length of the links.

Figures 6 to 8 illustrate an alternative mesh structure for a web 27' of male touch fastener material 28 in accordance with an aspect of the invention. The mesh structure is similar to that of the previous embodiment except that an additional node 50 is located centrally within each circular group of six nodes 50. In this mesh structure, some of the nodes are directly interconnected with five adjacent nodes by respective links whilst others are only directly interconnected by respective links with three adjacent nodes. In all other respects, the material 28 in the web 27' is identical to that of the previous embodiment, to which the reader should refer for details.

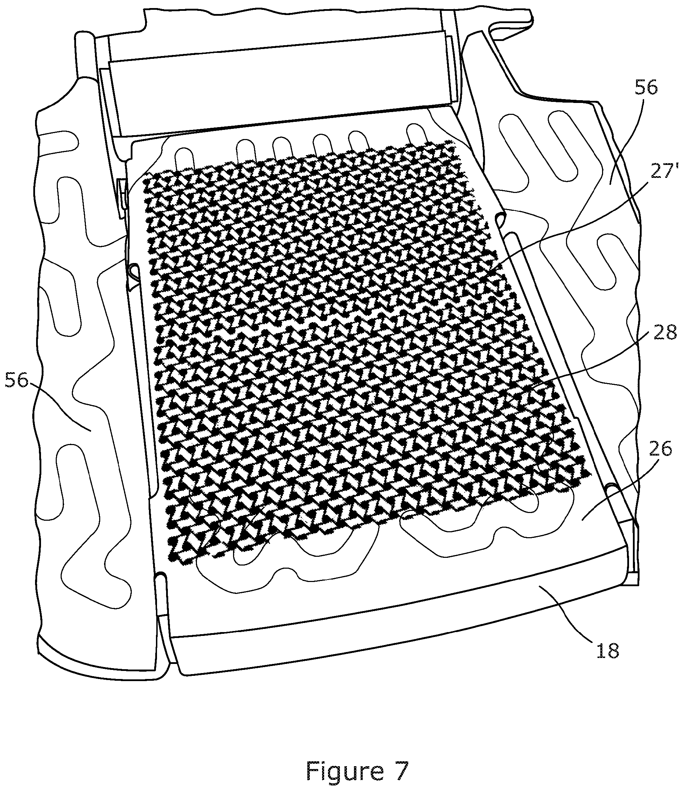

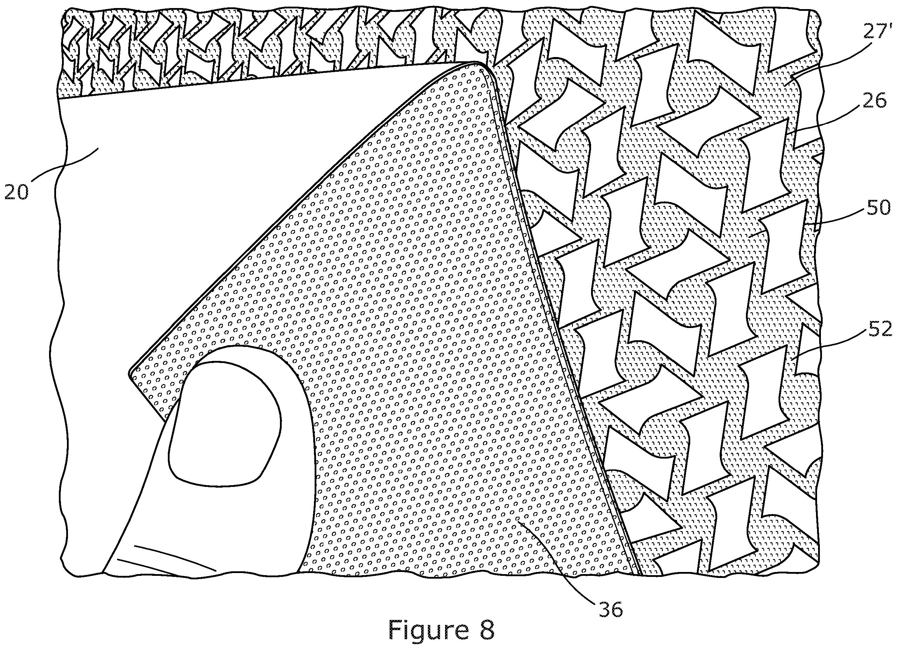

Figure 7 shows the web 27' of male touch fastener material 28 applied to the upper surface 26 of a central main seat-cushion pad 18 of a vehicle seat. It can be seen that the material 28 covers the majority of the upper surface of the pad 18 so that an outer seat-cover can be fixed firmly and evenly over substantially the whole cushion pad. Figure 7 also shows a pair of bolster cushion pads 56 either side of the main seat-cushion. Figure 8 illustrates attachment of part of an outer seat cover 20 to a seat-cushion pad 18 using the web 27' of male touch fastener material 28. The male engagement members 30 of the web engage with the fibres of the brush nylon inner layer 36 of the outer cover to releasably affix the outer cover to the seat pad with a desired peal strength.

An advantage of the alternative mesh structure of Figures 6 to 8 is that the additional nodes increase the contact area between the material 28 and the outer seat cover 20. This increases the peel strength and improves the appearance of the seat cover, which is more firmly secured. However, the apertures 54 are sufficient to provide a satisfactory level of air permeability for use with a through seat ventilation system and the mesh structure is still able the stretch sufficiently in multiple directions to provide acceptable levels of comfort and noise.

Webs 27, 27' of male touch fastener material with a mesh structure in accordance with an aspect of the invention can be produced by punching out the mesh structure from a conventional sheet or web of male touch fastener material which, prior to punching, does not have sufficient air permeability for use with a seat having a through seat ventilation system and/or is substantially not able to stretch, at least in multiple directions in the plane of the material. Suitable materials include sheet male touch fastener materials manufactured by Velcro (RTM) and 3M (RTM). A conventional sheet of male hook fastener material will typically exhibit a maximum elongation in the region of 1%. In contrast, when such a sheet material is formed into a mesh structure in accordance with aspects of the present invention, the mesh structure can be elongated by around 15-20%.

The material 28 may be of any suitable type and may be a woven or non-woven fabric or a plastics material, for example. Webs 27, 27' of male touch fastener material with a mesh structure in accordance with an aspect of the invention can be provided in sheets or panels which can be cut to size or which may be dimensioned and shaped for particular applications. Where necessary, more than one sheet or panel of the material can used if the area to be covered is large.

It is particularly advantageous to use a web 27, 27' of male touch fastener material 28 to secure an outer seat-cover to a main seat-cushion in a vehicle seat as the main seat-cushion is generally relatively flat (or slightly concave) and the seat-cover is most highly stressed in this region where the occupant's weight is supported. However, male touch fastener material 28 in accordance with an aspect of the invention can also be used with other cushion pads in a vehicle seat, including a main cushion pad in the backrest. Indeed, a web 27 of male touch fastener material 28 in accordance with an aspect of the invention is not limited to application in securing a seat cover to a cushion pad in a vehicle seat but could be applied in a range of applications where it is desirable to affix a cover to a surface. This would include other upholstery applications, including seats in general and other types of furnishings, and for other trimmed surfaces. The material 28 may also be used to affix cover materials to other surfaces in a vehicle, especially surfaces that are substantially flat or concave, and where it is desirable to prevent the cover material from separating from the surface.

The mesh structure of the web 27, 27' of male touch fastener material 28 can be varied from those described above provided the resultant structure is sufficiently air permeable and is able to stretch sufficiently in multiple directions. For example, the shapes and dimensions of the nodes 50 and links 52 can be varied. The repeating pattern of the nodes can also be varied. In an alternative embodiment, the links may be curved when the material is in a relaxed state so that the links are longer than the minimum pacing between the nodes they interconnect. When the material is subject to a force tending to pull nodes apart, the curved links interconnecting those nodes straighten as the nodes rotate to increase the spacing between the nodes. Again, this enables the spacing between the nodes to be increased, at least to a limited extent. The curved links 52 can be aligned with one another so that they do not restrict each other or the rotary movement of the nodes to allow the mesh structure to be stretched in different directions.

The above embodiments are described by way of example only. Many variations are possible without departing from the scope of the invention as defined in the appended claims.

## Claims

1. A web of male touch fastener material (27; 27') comprising a plurality of male engagement members (30), wherein the web has a mesh structure comprising a plurality of spaced nodes (50) interconnected by elongate links (52) with apertures (54) between the nodes and links, **characterised in that** each link (52) interconnects an adjacent pair of nodes (50) and the length of each link is greater than the shortest distance (Z) measured between said pair of nodes, at least when the mesh structure is in a relaxed, un-stretched condition; the nodes having a minimum spacing when the web is in a relaxed, un-stretched condition and the web structure being configured such that in use the spacing between any given pair of adjacent nodes interconnected by a link can be increased from the minimum spacing if the nodes are pulled apart but without stretching the link itself, such that the structure is stretchable in at least three different directions parallel to the plane of the web.

2. A web of male touch fastener material (27; 27') as claimed in claim 1, wherein the mesh structure is stretchable in at least six directions parallel to the plane of the web.

3. A web of male touch fastener material (27; 27') as claimed in claim 1 or claim 2, wherein the material comprises a planar base layer (40) having opposed major faces (42, 44), the plurality of male engagement members (30) projecting from a first one of the major faces (42).

4. A web of male touch fastener material (27; 27') as claimed in claim 3, wherein the base layer (40) is non-elastic.

5. A web of male touch fastener material (27; 27') as claimed in any one of the preceding claims, wherein the links (52) are straight and a longitudinal centreline (Y) of each link is aligned tangentially to an imaginary circle drawn about the centre of each node (50) to which the link is connected to, at least when the material is in a relaxed, un-stretched condition.

6. A web of male touch fastener material (27; 27') as claimed in any one of the preceding claims, wherein, when viewed in plan, the links (52) all project from their respective nodes in the same rotary direction.

7. A web of male touch fastener material (27; 27') as claimed in any one of claims 1 to 4, wherein the links (52) are curved when the material is in a relaxed, un-stretched condition.

8. A web of male touch fastener material (27; 27') as claimed in any one of the preceding claims, wherein the nodes (50) are arranged in a repeating pattern, with each node interconnected with at least three adjacent nodes by respective links (52).

9. A web of male touch fastener material (27; 27') as claimed in any one of the preceding claims, wherein the nodes (50) are arranged in a repeating pattern comprising at least some of the nodes (50) being arranged in groups aligned in a circle about a central point.

10. Upholstery comprising a cushion pad (18) and an outer cover (20), wherein the outer cover is affixed to a surface of the cushion pad by means of a web of male touch fastener material (27; 27') according to any one of the preceding claims.

11. Upholstery as claimed in claim 10, wherein, the web of male touch fastener material (27; 27') is affixed to a surface (26) of the cushion pad (30), male engagement members (30) of the male touch fastener material (27; 27') engaging with an inner surface of the outer cover.

12. Upholstery as claimed in claim 10 or claim 11, wherein the outer cover (30) comprises an inner surface (36) of brushed nylon.

13. Upholstery as claimed in any one of claims 10 to 12, wherein the upholstery forms part of a vehicle seat (12).

14. A vehicle seat (12) comprising upholstery as claimed in any one of claims 10 to 13.

## Patentansprüche

1. Gewebe bestehend aus einem Klettverschlusshakenmaterial (27, 27'), umfassend eine Mehrzahl von Eingriffselementen (30), wobei das Gewebe eine Maschenstruktur aufweist, die eine Mehrzahl zueinander beabstandeter und mittels länglicher Verbindungen (52) verbundener Knoten (50) umfasst, wobei Freiräume (54) zwischen den Knoten und den Verbindungen vorgesehen sind,
**dadurch gekennzeichnet,**
**dass** jede Verbindung (52) ein benachbartes Paar von Knoten (50) verbindet und die Länge jeder Verbindung zumindest in dem Fall, dass die Maschenstruktur in einem entspannten und ungedehnten Zustand ist, größer ist als der kürzeste Abstand (Z) zwischen besagtem Paar von Knoten; wobei die Knoten einen Mindestabstand aufweisen, wenn das Gewebe in einem entspannten und ungedehnten Zustand ist, wobei die Gewebestruktur derart ausgebildet ist, dass in einem Benutzungszustand der Abstand zwischen jedem Paar benachbarter Knoten, die mittels einer Verbindung verbunden sind, bezüglich des kürzesten Abstands vergrößerbar ist, wenn die Knoten auseinandergezogen werden, wobei die Verbindung selbst nicht gedehnt wird, so dass die Struktur in zumindest drei unterschiedlichen und parallel zur Ebene des Gewebes verlaufenden Richtungen dehnbar ist.

2. Gewebe bestehend aus einem Klettverschlusshakenmaterial (27, 27') nach Anspruch 1, wobei die Maschenstruktur in wenigstens sechs Richtungen, die parallel zur Ebene des Gewebes verlaufen, dehnbar ist.

3. Gewebe bestehend aus einem Klettverschlusshakenmaterial (27, 27') nach Anspruch 1 oder 2, wobei das Material eine ebene Basislage (40) mit zwei gegenüberliegenden Hauptflächen (42, 44) aufweist, wobei die Mehrzahl der Eingriffselemente (30) von einer ersten Hauptfläche (42) hervorstehen.

4. Gewebe bestehend aus einem Klettverschlusshakenmaterial (27, 27') nach Anspruch 3, wobei die Basislage (40) unelastisch ist.

5. Gewebe bestehend aus einem Klettverschlusshakenmaterial (27, 27') nach einem der vorangehenden Ansprüche, wobei die Verbindungen (52) geradlinig ausgebildet sind, wobei eine zentrale Längsachse (Y) jeder Verbindung an eine imaginäre und um den Mittelpunkt eines jeden Knotens, mit dem die Verbindung verbunden ist, gezogene Kreislinie, zumindest wenn das Gewebe in einem entspannten und ungedehnten Zustand ist, tangential anliegt.

6. Gewebe bestehend aus einem Klettverschlusshakenmaterial (27, 27') nach einem der vorangehenden Ansprüche, wobei alle Verbindungen (52) bezüglich einer Draufsicht von ihren jeweiligen Knoten entlang derselben Umlaufrichtung abstehend verlaufen.

7. Gewebe bestehend aus einem Klettverschlusshakenmaterial (27, 27') nach einem der Ansprüche 1 bis 4, wobei die Verbindungen (52) gekrümmt sind, wenn das Gewebe in einem entspannten und ungedehnten Zustand ist.

8. Gewebe bestehend aus einem Klettverschlusshakenmaterial (27, 27') nach einem der vorangehenden Ansprüche, wobei die Knoten (50) in einem sich wiederholenden Muster angeordnet sind, wobei jeder Knoten mit wenigstens drei benachbarten Knoten mittels entsprechenden Verbindungen (52) verbunden ist.

9. Gewebe bestehend aus einem Klettverschlusshakenmaterial (27, 27') nach einem der vorangehenden Ansprüche, wobei die Knoten (50) in einem sich wiederholenden Muster angeordnet sind, wobei das Muster zumindest einige der Knoten (50) umfasst, die entlang eines Kreises um einen Mittelpunkt angeordnet sind.

10. Polster, umfassend ein Kissenpolster und eine Außenabdeckung (20), wobei die Außenabdeckung an einer Oberfläche des Kissenpolsters mittels eines Gewebes bestehend aus einem Klettverschlusshakenmaterial (27, 27') nach einem der vorangehenden Ansprüche befestigt ist.

11. Polster nach Anspruch 10, wobei das Gewebe bestehend aus einem Klettverschlusshakenmaterial (27, 27') an einer Oberfläche (26) des Kissenpolsters (30) befestigt ist, wobei Eingriffselemente (30) des Klettverschlusshakenmaterial (27, 27') in eine innere Oberfläche der Außenabdeckung eingreifen.

12. Polster nach Anspruch 10 oder 11, wobei die Außenabdeckung (30) eine innere Oberfläche (36) aus gebürstetem Nylon aufweist.

13. Polster nach einem der Ansprüche 10 bis 12, wobei das Polster einen Teil eines Fahrzeugsitzes (12) bildet.

14. Fahrzeugsitz (12), umfassend das Polster nach einem der Ansprüche 10 bis 13.

## Revendications

1. Nappe de matière (27 ; 27') de fixation par contacts mâles, comprenant une pluralité d'éléments (30) agrippants mâles, la nappe ayant une structure à maille comprenant une pluralité de nœuds (50) à distance interconnectés par des maillons (52) oblongs avec des ouvertures (54) entre les nœuds et les maillons, **caractérisée en ce que** chaque maillon (52) interconnecte une paire voisine de nœuds (50) et la longueur de chaque maillon est plus grande que la distance (Z) la plus courte mesurée entre chaque paire de nœuds, au moins lorsque la structure à maille est dans un état relaxé, non étiré ; les nœuds ayant un espacement minimum, lorsque la nappe est dans un état relaxé, non étiré et la structure de la nappe étant configurée de manière à ce que, en utilisation, l'espacement entre n'importe quelle paire donnée de nœuds voisins interconnectés par un maillon puisse être augmenté à partir de l'espacement minimum, si les nœuds sont tirés en les écartant l'un de l'autre, mais sans étirer le maillon soi-même, de manière à ce que la structure puisse être étirée dans au moins trois directions différentes parallèlement au plan de la nappe.

2. Nappe de matière (27 ; 27') de fixation par contacts mâles suivant la revendication 1, dans laquelle la structure à maille peut être étirée dans au moins six directions parallèlement au plan de la nappe.

3. Nappe de matière (27 ; 27') de fixation par contacts mâles suivant la revendication 1 ou la revendication 2, dans laquelle le matériau comprend une couche (40) de base plane ayant des faces (42, 44) principales opposées, la pluralité d'éléments (30) agrippants mâles faisant saillie d'une première des faces (42) principales.

4. Nappe de matière (27 ; 27') de fixation par contacts mâles suivant la revendication 3, dans laquelle la couche (40) de base est inélastique.

5. Nappe de matière (27 ; 27') de fixation par contacts mâles suivant l'une quelconque des revendications précédentes, dans laquelle les maillons (52) sont droits et une ligne (Y) centrale longitudinale de chaque maillon est tangente à un cercle imaginaire tracé autour du centre de chaque nœud (50) auquel le maillon est relié, au moins lorsque la matière est dans un état relaxé, non étiré.

6. Nappe de matière (27 ; 27') de fixation par contacts mâles suivant l'une quelconque des revendications précédentes dans laquelle, vu en plan, les maillons (52) font tous saillie vers leurs nœuds respectifs dans le même sens de rotation.

7. Nappe de matière (27 ; 27') de fixation par contacts mâles suivant l'une quelconque des revendications 1 à 4, dans laquelle les maillons (52) sont incurvés, lorsque la matière est dans un état relaxé, non étiré.

8. Nappe de matière (27 ; 27') de fixation par contacts mâles suivant l'une quelconque des revendications précédentes, dans laquelle les nœuds (50) sont disposés suivant un motif répétitif, chaque nœud étant interconnecté à au moins trois nœuds voisins par des maillons (52) respectifs.

9. Nappe de matière (27 ; 27') de fixation par contacts mâles suivant l'une quelconque des revendications précédentes, dans laquelle les nœuds (50) sont disposés suivant un motif répétitif, au moins certains des nœuds (50) étant disposés en groupes alignés sur un cercle autour d'un point central.

10. Sellerie comprenant un coussin (18) de rembourrage et une couverture (20) extérieure, la couverture extérieure étant fixée à une surface du coussin de rembourrage au moyen d'une nappe de matière (27 ; 27') de fixation par contacts mâles suivant l'une quelconque des revendications précédentes.

11. Sellerie suivant la revendication 10, dans laquelle la nappe de matière (27 ; 27) de fixation par contacts mâles est fixée à une surface (26) du coussin (30) de rembourrage, des éléments (30) agrippants mâles de la matière (27 ; 27') de fixation par contacts mâles s'agrippant à une surface intérieure de la couverture extérieure.

12. Sellerie suivant la revendication 10 ou la revendication 11, dans laquelle la couverture (30) extérieure comprend une surface (36) intérieure de nylon brossé.

13. Sellerie suivant l'une quelconque des revendications 10 à 12, dans laquelle la sellerie forme une partie d'un siège (12) de véhicule.

14. Siège (12) de véhicule comprenant de la sellerie suivant l'une quelconque des revendications 10 à 13.
